# EUROPEAN PATENT APPLICATION

(11) **EP 3 605 356 A1**
(43) Date of publication of application: **05.02.2020**
(21) Application number: 18771679.0
(22) Date of filing: 19.03.2018
(51) Int. Cl.: G06F 17/24

(54) **METHOD AND DEVICE FOR QUICKLY INSERTING TEXT OF SPEECH CARRIER**

(30) Priority: 20.03.2017 CN 201710165757
(71) Applicant: Beijing Kingsoft Office Software, Inc., Beijing 100085 (CN); Zhuhai Kingsoft Office Software Co., Ltd, Zhuhai, Guangdong 519015 (CN); Guangzhou Kingsoft Mobile Technology Co., Ltd, Guangzhou, Guangdong 510000 (CN)
(72) Inventor: OU, Yuejian, Zhuhai, Guangdong 519015 (CN); HUANG, Zhijun, Zhuhai, Guangdong 519015 (CN); GAO, Yanping, Zhuhai, Guangdong 519015 (CN)
(74) Representative: Guérin, Jean-Philippe
(86) International application number: PCT/CN2018/079497
(87) International publication number: WO 2018/171561

(57) **Abstract**

Embodiments of the present application provide a method and apparatus for quickly inserting a text of a voice carrier, the method comprising: opening a document to be edited; obtaining a voice acquisition instruction from a user; obtaining a voice of interest according to the voice acquisition instruction; in a first document editing software, recognizing a text corresponding to the voice of interest; moving the text into the document to be edited. By applying the method of the embodiments of the present application, work efficiency can be improved.

## Description

The present application claims the priority to a Chinese patent application No. 201710165757.X filed with the China National Intellectual Property Administration on March 20, 2017 and entitled "Method and Device for Quickly Inserting Text of Speech Carrier", which is incorporated herein by reference in its entirety.

### TECHNICAL FIELD

The present application relates to the field of electronic document editing, and in particular to a method and apparatus for quickly inserting a text of a voice carrier.

### BACKGROUND

When a user uses a document editing software in a terminal device such as a computer or a mobile phone to perform document editing, sometimes a text corresponding to a voice in a voice carrier needs to be inserted into the document, such as a text corresponding to a conference recording, a text corresponding to a voice in a movie segment, and the like. In the existing method, it is required to initiate an existing voice recognition program to recognize the text corresponding to the voice in the voice carrier, and then the text recognized is copied and pasted to the document to be edited.

It can be seen that in the prior art, a plurality of software and programs need to be initiated manually to insert the text corresponding to the voice in the voice carrier into the document to be edited, and the text obtained after the voice recognition is copied and pasted into the document to be edited manually, and therefore the work efficiency is low.

In other solutions, if a user needs to insert a text corresponding to a voice in a voice carrier to a document, the user adds the text corresponding to the voice in the voice carrier to the document to be edited by typing manually, which is inefficient.

### SUMMARY

The objective of embodiments of the present application is to provide a method and an apparatus for quickly inserting a text of a voice carrier, which can improve work efficiency. The specific technical solutions are as follows.

An embodiment of the present application discloses a method for quickly inserting a text of a voice carrier, comprising:
opening a document to be edited;
obtaining a voice acquisition instruction from a user;
obtaining a voice of interest according to the voice acquisition instruction;
recognizing a text corresponding to the voice of interest in a first document editing software;
moving the text into the document to be edited.

Optional, the voice acquisition instruction comprises:
an instruction of selecting an existing voice.

Optionally, obtaining the voice of interest according to the voice acquisition instruction comprises:
selecting an existing voice carrier files as the voice of interest when the voice acquisition instruction is an instruction of selecting an existing voice.

Optionally, the voice acquisition instruction comprises:
an instruction of extracting an existing voice.

Optionally, obtaining the voice of interest according to the voice acquisition instruction comprises:
obtaining an existing voice carrier file when the voice acquisition instruction is an instruction of extracting an existing voice;
obtaining a voice start point and a voice termination point in the voice carrier file;
extracting a voice segment between the voice start point and the voice termination point in the voice carrier file as the voice of interest.

Optionally, obtaining a voice start point and a voice termination point in the voice carrier file comprising:
obtaining, in the voice carrier file, the voice start point and the voice termination point determined by using the location of a mouse cursor, or
obtaining, in the voice carrier file, the voice start point and the voice termination point determined by using the location of a touch screen cursor.

Optionally, the voice acquisition instruction comprises:
an instruction of recording a voice by using an audio input device.

Optionally, obtaining the voice of interest according to the voice acquisition instruction comprises:
recording a voice by using the audio input device and using the recorded voice as the voice of interest when the voice acquisition instruction is an instruction of recording a voice by using an audio input device.

Optionally, moving the text into the document to be edited comprises:
moving the text into a location to be inserted in the document to be edited, wherein the location to be inserted is a location of a mouse cursor or a location of a touch screen cursor.

Optionally, after moving the text into the document to be edited, the method further comprises:
modifying the format of the text to the format of text in the document to be edited, the format including one or more of font, font size, color and line spacing.

An embodiment of the present application further discloses an apparatus for quickly inserting a text of a voice carrier, comprising:
an opening module, configured for opening a document to be edited;
an instruction acquisition module, configured for obtaining a voice acquisition instruction from a user;
a voice acquisition module, configured for obtaining a voice of interest according to the voice acquisition instruction;
a recognition module, configured for recognizing a text corresponding to the voice of interest in a first document editing software;
a text moving module, configured for moving the text into the document to be edited.

Optional, the voice acquisition instruction comprises:
an instruction of selecting an existing voice.

Optionally, the voice acquisition module is specifically configured for:
selecting an existing voice carrier files as the voice of interest when the voice acquisition instruction is an instruction of selecting an existing voice.

Optionally, the voice acquisition instruction comprises:
an instruction of extracting an existing voice.

Optionally, the voice acquisition module comprises:
a file acquisition sub-module, configured for obtaining an existing voice carrier file when the voice acquisition instruction is an instruction of extracting an existing voice;
an interval acquisition sub-module, configured for obtaining a voice start point and a voice termination point in the voice carrier file;
an extracting sub-module, configured for extracting a voice segment between the voice start point and the voice termination point in the voice carrier file as the voice of interest.

Optionally, the interval acquisition sub-module is specifically configured for:
obtaining, in the voice carrier file, the voice start point and the voice termination point determined by using the location of a mouse cursor, or
obtaining, in the voice carrier file, the voice start point and the voice termination point determined by using the location of a touch screen cursor.

Optionally, the voice acquisition instruction comprises:
an instruction of recording a voice by using an audio input device.

Optionally, the voice acquisition module is specifically configured for:
recording a voice by using the audio input device and using the recorded voice as the voice of interest when the voice acquisition instruction is an instruction of recording a voice by using an audio input device.

Optionally, the text moving module is specifically configured for:
moving the text into a location to be inserted in the document to be edited, wherein the location to be inserted is a location of a mouse cursor or a location of a touch screen cursor.

Optionally, the apparatus further comprises:
a format modifying module, configured for modifying the format of the text to the format of text in the document to be edited after the text is moved to the document to be edited, the format including one or more of font, font size, color and line spacing.

An embodiment of the present application further discloses an electronic device, comprising a processor and a memory,
the memory is configured for storing a computer program;
the processor is configured for implementing any of the above methods for quickly inserting a text of a voice carrier when executing the program stored in the memory.

An embodiment of the present application further discloses a computer readable storage medium, wherein the computer readable storage medium stores a computer program, and the computer program implements any of the above methods for quickly inserting a text of a voice carrier when being executed by a processor.

An embodiment of the present application also discloses executable program code for implementing any of the above methods for quickly inserting a text of a voice carrier when being executed.

In the method and apparatus for quickly inserting a text of a voice carrier provided by the embodiments of the present application, a document to be edited is first opened. Secondly, a voice acquisition instruction from a user is obtained. A voice of interest is obtained according to the voice acquisition instruction. Then, in the first document editing software, the text corresponding to the voice of interest is recognized. Finally, the text is added into the document to be edited. In the embodiments of the present application, only the first document editing software is used to automatically recognize and insert the text corresponding to the voice of interest. Compared with the prior art in which multiple software and programs need to be initiated and the recognized text corresponding to the voice of interest are copied and pasted manually or the prior art in which the text corresponding to the voice of interest is inserted by typing manually, the present embodiment improves the work efficiency.

Of course, any of the products or methods of the present application is not necessarily required to achieve all of the advantages described above at the same time.

### BRIEF DESCRIPTION OF THE DRAWINGS

In order to illustrate the technical solutions of the embodiments of the present application and the prior art more clearly, drawings used in the embodiments and the prior art will be briefly described below. It is obvious that the drawings described below are only some embodiments of the present application, other drawings can be obtained by those of ordinary skill in the art without any creative effort based on these drawings.
Fig. 1 is a schematic flowchart of a method for quickly inserting a text of a voice carrier provided by an embodiment of the present application;
Fig. 2 is a schematic diagram of a preview interface of a voice carrier file provided by an embodiment of the present application;
Fig. 3 is a schematic flowchart of an embodiment based on the method shown in Fig. 1;
Fig. 4 is a schematic flowchart of another embodiment based on the method shown in Fig. 1;
Fig. 5 is a schematic flowchart of further another embodiment based on the method shown in Fig. 1;
Fig. 6 is a schematic structural diagram of an apparatus for quickly inserting a text of a voice carrier provided by an embodiment of the present application;
Fig. 7 is a schematic structural diagram of an embodiment based on the apparatus shown in Fig. 6;
Fig. 8 is a schematic structural diagram of another embodiment based on the apparatus shown in Fig. 6;
Fig. 9 is a schematic structural diagram of an electronic device provided by an embodiment of the present application.

### DETAILED DESCRIPTION OF THE INVENTION

In order to make the objectives, technical solutions, and advantages of the present application more clear, the present application will be further described in detail below with reference to the accompanying drawings and by ways of embodiments. It is obvious that the embodiments described are only some embodiments of the present application, not all of the embodiments. All other embodiments obtained by those of ordinary skill in the art without any creative effort based on the embodiments of the present application fall within the protection scope of the present application.

Embodiments of the present application disclose a method and apparatus for quickly inserting a text of a voice carrier, which can improve work efficiency.

An embodiment of the present application discloses a method for quickly inserting a text of a voice carrier, comprising: obtaining a voice acquisition instruction from a user; obtaining a voice of interest according to the voice acquisition instruction; in a first document editing software, recognizing a text corresponding to the voice of interest; adding the text into a document to be edited in the first document editing software. It can be seen that, in the embodiment of the present application, only the first document editing software is used to automatically recognize and insert the text corresponding to the voice of interest. Compared with the prior art in which multiple software and programs need to be initiated and the recognized text corresponding to the voice of interest are copied and pasted manually or the prior art in which the text corresponding to the voice of interest is inserted by typing manually, the present embodiment improves the work efficiency.

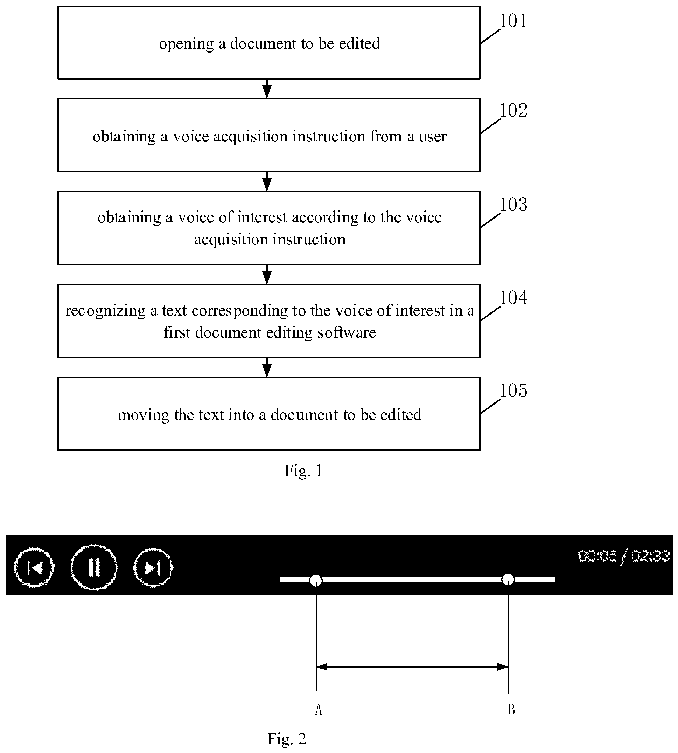

Fig. 1 is a flowchart of a method for quickly inserting a text of a voice carrier according to an embodiment of the present application, the method comprises the following steps.

Step 101, opening a document to be edited.

In the embodiment of the present application, if there is no document that is already opened, a first document editing software may be used to open a document as the document to be edited; if there is a document that is already opened, step 101 is not required to be performed.

The embodiment of the present application is executed by a processor of a terminal device, wherein the terminal comprises a computer, a mobile phone, a tablet computer, a device capable of editing an electronic document, and the like.

The first document editing software is a software installed in the terminal device for editing electronic documents, such as Kingsoft office software WPS Office. Each step in the embodiment of the present application may be completed in the first document editing software, or Step 102-Step 103 may also be implemented by other software.

The first document editing software in the embodiment of the present application may include a voice extracting function and a voice recognition function. For example, the first document editing software may be integrated with a voice extracting program, and a voice of a selected interval can be extracted by the voice extracting program, and the first document editing software can also be integrated with a voice recognition program, and a text corresponding to a voice can be recognized by the voice recognition program.

Step 102: obtaining a voice acquisition instruction from a user.

In the embodiment of the present application, a plurality of methods for obtaining a voice may be provided, such as selecting an existing voice, extracting an existing voice, recording a voice by using an audio input device, and the like. Correspondingly, the voice acquisition instruction may be a selection instruction, that is to select one or more voice carrier files as the voice of interest from the stored voice carrier files; or, the voice acquisition instruction may be an extracting instruction, that is to extract a voice segment from a voice carrier file as the voice of interest; or, the voice acquisition instruction can be a recording instruction, that is to record a voice as the voice of interest.

The embodiment of the present application may establish a user selection window in the first document editing software in advance, and provide options of the above-mentioned plurality of voice acquisition methods for the user to select, and then obtain a click operation on the options of voice acquisition methods performed by the user.

It should be noted that Step 101 and Step 102 in the embodiment of the present application may not be in a fixed order. That is to say, the embodiment of the present application can obtain the voice acquisition instruction from the user after the document to be edited is opened by using the first document editing software, and this case is usually applicable in the scenario in which the document to be edited is edited first and then the voice of interest is obtained. In addition, the document to be edited can be opened after the voice acquisition instruction from the user is obtained by using the first document editing software, and this case is usually applicable in the scenario in which the carrier where the voice of interest is located is known and the text corresponding to the voice of interest needs to be obtained first. In this scenario, a plurality of documents to be edited may be opened to insert the text corresponding to the voice of interest into the plurality of documents to be edited. The sequence of Step 101 and Step 102 in the embodiment of the present application is determined according to the usage habits of the user or the specific usage scenario.

Step 103: obtaining a voice of interest according to the voice acquisition instruction.

In some cases, the voice of interest may exist in an existing electronic carrier, or exist in an electronic carrier stored in the terminal device, and the electronic carrier may be a voice carrier file, such as music, video or recordings existing in the terminal device. As for the existing electronic carrier containing the voice of interest, the voice acquisition instruction can be an instruction of selecting an existing voice to obtain directly an existing voice carrier file as the voice of interest, such as selecting a recording file of a conference as the voice of interest. The voice acquisition instruction may also be an instruction of extracting an existing voice to extract a partial segment of an existing voice carrier file as the voice of interest, such as extracting a voice in the movie as the voice of interest.

In other cases, the voice of interest may also exist in a non-existing electronic carrier, or in an electronic carrier that is not stored in the terminal device, such as a voice broadcasted outdoors, or a voice in a television program played in a television or the like. In this case, the user cannot obtain or it is not easy to obtain the electronic carrier of the voice of interest. Therefore, in this situation, according to the embodiment, the voice acquisition instruction may be an instruction of recording a voice using an audio input device, and the voice of interest can be recorded by a variety of audio input devices, such as microphones or the like. For example, a microphone can be used to record the voice of a television program played on a television.

It can be seen that the voice of interest in the embodiment of the present application comes from wider sources, and thus the universality is increased.

Step 104: in a first document editing software, recognizing a text corresponding to the voice of interest.

For example, the voice recognition program integrated in the first document editing software may be used to recognize the text corresponding to the voice of interest, wherein the voice recognition program may be existing various programs for recognizing the text corresponding to a voice. The embodiment of the present application may pre-set a program interface in the first document editing software to facilitate replacement of a plurality of voice recognition programs.

Step 105, moving the text into the document to be edited.

The Step 105 may be adding the text to the document to be edited in the first document editing software.

In the embodiment of the present application, the recognized text is added to the document to be edited, and may be added to a preset fixed location, a random location in the document to be edited, or may be added to a location to be inserted in the document to be edited set by the user.

The text adding method can be adding the text during the voice recognition. That is, once a word is recognized, the word is immediately added to the document to be edited. The synchronous adding method is beneficial for the user to use or edit the recognized words as soon as possible. Alternatively, in the embodiment of the present application, the text is added in whole after the words corresponding to the voice of interest are all recognized. The overall adding method is beneficial for maintaining the integrity of the text corresponding to the voice of interest, and is more suitable for the use and editing of the overall content of the text corresponding to the voice of interest.

The specific adding manners of adding the text to the document to be edited may be a plurality of manners such as sliding, scrolling, and beating. The embodiment of the present application does not limit the specific adding manners of the text. The specific adding manners of adding the text to the document to be edited in the embodiment of the present application can realize automatic insertion of the recognized text corresponding to the voice of interest into the document to be edited, instead of manually moving operations, such as copy, paste and drag.

Therefore, the embodiment of the present application can prevent the user from manually copying and pasting the recognized text into the document to be edited, can realize automatic insertion, and therefore can improve work efficiency.

It can be seen that, in the method for quickly inserting a text of a voice carrier provided by the embodiment of the present application, a document to be edited is first opened. Secondly, a voice acquisition instruction from a user is obtained. The voice of interest is then obtained according to the voice acquisition instruction. Then, in the first document editing software, the text corresponding to the voice of interest is recognized. Finally, the text is added into the document to be edited. In the embodiment of the present application, when a document is edited in the first document editing software, a voice of interest can be obtained, and the text corresponding to the voice of interest can be recognized and added into the document to be edited, so as to realize the recognition of the text corresponding to the voice of interest and the automatic insertion into the document to be edited. In the embodiment of the present application, only the first document editing software is used to automatically recognize and insert the text. Compared with the prior art in which multiple software and programs need to be initiated and the recognized text corresponding to the voice of interest are copied and pasted manually or the prior art in which the text corresponding to the voice of interest is inserted by typing manually, the present embodiment improves the work efficiency.

The following is an example of the implementation process of the embodiment of the present application. Fig. 2 is a schematic diagram of a preview interface of a voice carrier file according to an embodiment of the present application. Specifically, when a user uses a document editing software to edit a document, the user also listens to a voice carrier file. As shown in the schematic diagram of a preview interface of a voice carrier file shown in Fig.2, it is assumed that part of the voice is a voice of interest, referring to the voice in the interval AB in Fig.2. The user expects to insert the text corresponding to this voice of interest into the document to be edited. If some solutions in the prior art are used, a voice recognition software or program is required to first recognize the full text corresponding to the voice carrier file, and then the user searches for the text corresponding to the voice in the interval AB in the recognized text, and finally copy and paste the corresponding text into the document to be edited manually. During the above process, it needs to open the document editing software, the voice recognition software or program, and after the text corresponding to the voice carrier file is all recognized, the user manually selects and copies the needed text, and the work efficiency is low. If other solutions in the prior art are used, the user needs to type words manually to obtain the text corresponding to the voice in the interval AB, and the work efficiency is low.

With the method of the embodiment of the present application, when the first document editing software is configured for editing a document, a voice acquisition instruction from a user may be obtained. For example, multiple options may be provided for the user in the first document editing software, and the multiple options may correspond to multiple manners to obtain the voice of interest, such as obtaining the voice of interest by selecting a stored file, or obtaining the voice of interest by extracting a voice file, or recording the voice of interest through an audio input device, and the like. According to the user's click operation on the various options, the manner of obtaining a voice of interest, which is selected by the user, is determined, and the voice of interest is obtained according to the manner of obtaining a voice of interest selected by the user.

If the manner of extracting a voice file is adopted, a voice carrier file may be opened in advance, or may be opened after receiving a voice acquisition instruction. In the voice carrier file, the voice in the interval AB is obtained as the voice of interest by using a voice extracting program integrated in the first document editing software.

Specifically, in the embodiment of the present application, when the user listens to the voice carrier file, the click operation of the user's mouse on point A is first obtained, and then the click operation of the user's mouse on point B is obtained. After determining that the voice interval to be extracted is the interval between A and B, the voice in the interval AB is extracted by using the voice extracting program integrated in the first document editing software as the voice of interest. Then the text corresponding to the voice of interest is recognized by using the voice recognition program integrated in the first document editing software. In other words, the text corresponding to the voice in the interval AB is recognized. Finally, the recognized text corresponding to the voice in the interval AB is added to the document to be edited in the first document editing software. The embodiment of the present application only uses the first document editing software to complete the whole process, and can automatically recognize the corresponding text and insert it into the document to be edited for part of the voice in the voice carrier file, thereby improving work efficiency.

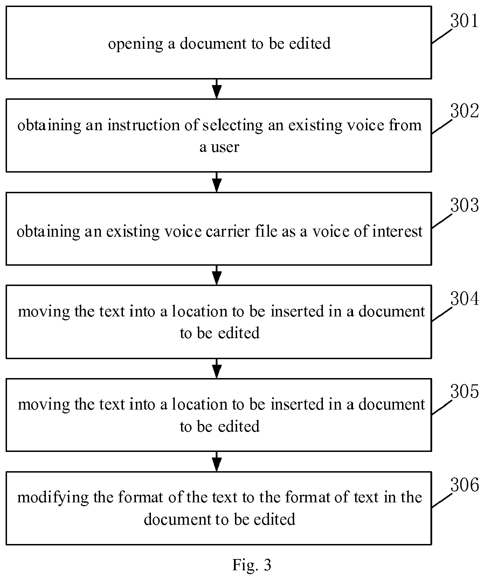

Fig. 3 is a flowchart of an embodiment based on the method shown in Fig. 1, comprising the following steps.

Step 301, opening a document to be edited.

In the embodiment of the present application, if there is no document which is already opened, a first document editing software can be used to open a document as the document to be edited; if there is a document which is already opened, Step 301 is not required to be performed.

The embodiment of the present application uses the first document editing software to open a document to be edited. Specifically, a terminal device receives an instruction from the user to open a document, such as a click operation on an icon of the first document editing software performed by the user, a click operation on an icon of the document to be edited performed by the user, a voice operation instruction from the user, and the like. The processor of the terminal device opens the document to be edited according to the instruction of opening a document.

For example, according to the instruction of opening a document which is a click operation on the icon of the first document editing software performed by the user, the processor of the terminal device opens the first document editing software first, and then receives an instruction of selecting a document from the user, such as obtaining an operation of selecting a document performed by the user, and finally opens the document as the document to be edited.

For example, according to the instruction of opening a document which is a click operation on the icon of the document to be edited performed by the user, the processor of the terminal device uses the first document editing software to open the document to be edited.

For example, according to the instruction of opening a document which is a voice operation instruction from the user, for example, the voice operation instruction of opening a document named "File 1", the processor of the terminal device finds the document named "File 1", and uses the first document editing software to open the document named "File 1" as the document to be edited, or the like.

The manners for opening a document to be edited in the embodiment of the present application may be several and may be combined with each other, which are not detailed herein.

Step 302: obtaining an instruction of selecting an existing voice from the user.

Step 302 may specifically be obtaining a selection instruction from the user.

In the embodiment of the present application, an option can be provided in the user option window preset in the first document editing software, so that the user can obtain the voice of interest by selecting a stored voice file. When a click operation on the option performed by the user is detected, it is considered that the user's voice acquisition instruction is obtained. This option can be located in an option window of a tool menu bar of the first editing software or a user dialog window outside the tool menu bar of the first editing software.

It should be noted that Step 301 and Step 302 in the embodiment of the present application may not be in a fixed order. That is to say, in the embodiment of the present application, an instruction of selecting an existing voice from the user may be obtained after the document to be edited is opened by using the first document editing software, or the document to be edited is opened after an instruction of selecting an existing voice from the user is obtained by using the first document editing software. The order of the two is determined according to the user's habits or specific usage scenarios.

Step 303: obtaining an existing voice carrier file as the voice of interest.

Step 303 may specifically be selecting one or more voice carrier files as the voice of interest from the stored voice carrier files according to the selection instruction.

The embodiment of the present application can select a voice carrier file as the voice of interest stored in the user's terminal device. A voice carrier file of multiple audio formats can be selected as the voice of interest, such as MP3 (Moving Picture Experts Group Audio Layer III), WMA (Windows Media Audio, a new audio format introduced by Microsoft), a sound file format WAV developed by Microsoft, FLAC (Free Lossless Audio Codec), OGG (OGG Vobis, a new audio compression format), AAC (Advanced Audio Coding) or the like. Alternatively, a voice carrier file of multiple video formats can be selected as the voice of interest, such as AVI (Audio Video Interleaved), MPEG (Moving Picture Expert Group), WMV, RMVB (Real Media Variable Bitrate, RM) or the like. A variety of voice carrier files may be such as movies in the user's computer, recordings in the user's mobile phone. Alternatively, a voice carrier file already existing in other terminal devices can be obtained using the Internet, local area network, Bluetooth or the like as the voice of interest.

Step 304: recognizing a text corresponding to the voice of interest in the first document editing software.

In the embodiment of the present application, the voice recognition program in the first document editing software is used to recognize the text corresponding to the voice of interest.

Step 305, moving the text to a location to be inserted in the document to be edited.

Step 305 may specifically be adding the text to a location to be inserted in the document to be edited in the first document editing software.

For example, if the terminal device is a terminal device using a mouse, such as a general desktop computer, the obtained location to be inserted may be the location of the mouse cursor; if the terminal device is a terminal device using a touch screen, such as a commonly used touch screen mobile phone, the obtained location to be inserted may be the location of the touch screen cursor.

The embodiment of the present application can also provide a confirmation process, for example, a user dialog window is provided to prompt the user to confirm the location to be inserted, so as to avoid user's misoperation. Then the text corresponding to the voice of interest is added to the location to be inserted in the document to be edited.

The specific manners of adding the text and moving the text to the document to be edited may be as shown in Step 105, which will not be repeated herein.

The embodiment of the present application may also obtain the location to be inserted after Step 301, that is, after opening the document to be edited in Step 301, the embodiment of the present application can detect the location of the mouse cursor or the location of the touch screen cursor as the location to be inserted. The embodiment of the present application may further provide a confirmation process after the detection, such as setting a user dialog window to prompt the user to confirm the location to be inserted, so as to avoid user's misoperation. Then, in Step 305, the text corresponding to the voice of interest is directly added to the location to be inserted in the document to be edited.

After the text is added to the location to be inserted in the document to be edited, the method of the embodiment of the present application further comprises Step 306, i.e. modifying the format of the text to the format of text in the document to be edited.

In the embodiment of the present application, after the text corresponding to the voice of interest is added to the document to be edited, the format of the original text in the document to be edited may be obtained first, the format including one or more of font, font size, color, and line spacing, and then the format of the text corresponding to the voice of interest is modified to be consistent with the format of the original text in the document to be edited, so as to make the text format of the user's document to be edited consistent.

It can be seen that in the method for quickly inserting a text of a voice carrier provided by the embodiment of the present application, an instruction of selecting an existing voice from the user is obtained, and then an existing voice carrier file is obtained as the voice of interest. Then, in the first document editing software, the text corresponding to the voice of interest is recognized. Finally, the text is added to the location to be inserted in the document to be edited, and the format of the text is modified to the format of the text in the document to be edited. In the embodiment of the present application, when a document is edited in the first document editing software, an existing voice carrier file can be selected, and the text corresponding to the voice is recognized and inserted automatically to the location to be inserted in the document to be edited. The embodiment of the present application only uses the first document editing software to realize automatic insertion of the text corresponding to the voice of interest into the location to be inserted in the document to be edited. Different from the prior art in which multiple software and programs need to be initiated and the recognized text are selected, copied and pasted manually to the location to be inserted in the document to be edited, the present embodiment improves the work efficiency.

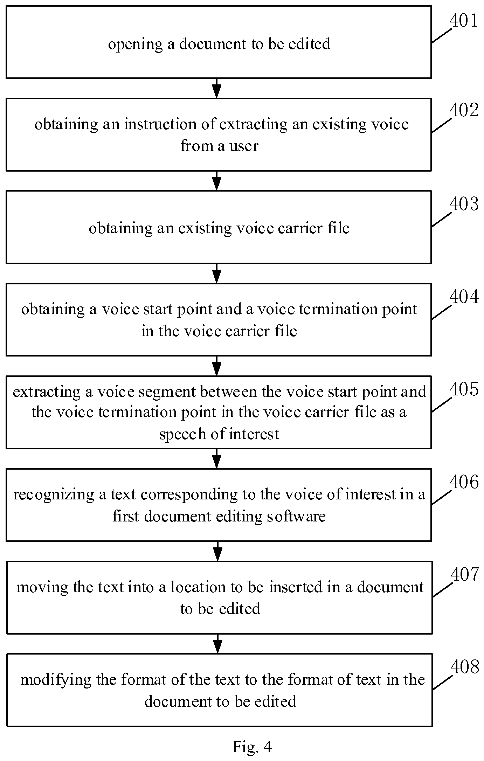

Fig. 4 is a flowchart of another embodiment based on the method shown in Fig. 1, comprising the following steps.

Step 401, opening a document to be edited.

In the embodiment of the present application, if there is no document which is already opened, a first document editing software can be used to open a document as the document to be edited; if there is a document which is already opened, Step 401 is not required to be performed.

The embodiment of the present application uses the first document editing software to open a document to be edited. Specifically, a terminal device receives an instruction of opening a document from the user, such as a click operation on the icon of the first document editing software performed by the user, a click operation on the icon of the document to be edited performed by the user, a voice operation instruction from the user, and the like. The processor of the terminal device opens the document to be edited according to the instruction of opening a document.

For example, according to the instruction of opening a document which is a click operation on the icon of the first document editing software performed by the user, the processor of the terminal device opens the first document editing software first, and then receives an instruction of selecting a document from the user, such as obtaining a selection operation on a document performed by the user, and finally opens the document as the document to be edited, or the like.

For example, according to the instruction of opening a document which is a click operation on the icon of the document to be edited performed by the user, the processor of the terminal device uses the first document editing software to open the document to be edited, or the like.

For example, according to the instruction of opening a document which is a voice operation instruction from the user, for example, opening a document named "File 1", the processor of the terminal device finds the document named "File 1", and uses the first document editing software to open the document named "File 1" as the document to be edited, or the like.

The manners for opening the document to be edited in the embodiment of the present application may be several and may be combined with each other, which are not detailed herein.

Step 402: obtaining an instruction of extracting an existing voice from the user.

Step 402 may specifically be obtaining an extracting instruction from the user.

In the embodiment of the present application, an option can be provided in the user option window preset in the first document editing software, so that the user can obtain the voice of interest by extracting a voice segment. When a click operation on the option performed by the user is detected, it is considered that the user's voice acquisition instruction is obtained. This option can be located in a option window of a tool menu bar of the first editing software or a user dialog window outside the tool menu bar of the first editing software.

It should be noted that Step 401 and Step 402 in the embodiment of the present application may not be in a fixed order. That is to say that the embodiment of the present application may obtain an instruction of extracting an existing voice from the user after the document to be edited is opened by using the first document editing software, or open the document to be edited after an instruction of extracting an existing voice from the user is obtained by using the first document editing software. The order of the two is determined according to the user's habits or specific usage scenarios.

Step 403: obtaining an existing voice carrier file.

The embodiment of the present application may select a voice carrier file as the voice of interest stored in the terminal device of the user, such as selecting a voice carrier file of the existing audio format and the video format as the voice of interest, such as a voice carrier file in the format of MP3, RMVB or the like, such as a movie in the user's computer, a recording in the user's mobile phone or the like. Internet, local area network, Bluetooth or the like can also be used to obtain an existing voice carrier file selected from other terminal devices as the voice of interest.

Step 404: obtaining a voice start point and a voice termination point in the voice carrier file.

Step 403 and Step 404 may specifically be obtaining, according to the extracting instruction, a voice start point and a voice termination point in a voice carrier file.

The embodiment of the present application can provide a preview interface of the voice carrier file, as shown in Fig. 2. In the preview interface of the voice carrier file, the user can preview, that is, listen to the voice carrier file, and the embodiment of the present application obtains the voice start point A and the voice termination point B selected by the user in the preview interface. According to different types of terminal devices, the embodiment of the present application adopts a corresponding method for obtaining the voice start point and the voice termination point. For example, for a terminal device using a mouse, the voice start point and the voice termination point are determined in a voice carrier file by using the location of a touch screen cursor. For example, if the execution host is a desktop computer using a mouse, the click operation on point A performed by the mouse of the user can be obtained and point A is used as the voice start point, and the voice termination point B determined by the location of the mouse cursor is obtained, point B is used as the voice termination point. The voice in the interval between the voice start point A and the voice termination point B is extracted as the voice of interest.

Alternatively, for a terminal device using a touch screen, the voice start point and the voice termination point are determined in a voice carrier file by using the location of the touch screen cursor. For example, if the execution host is a smart phone which usually comprises a touch screen, a click operation on point A of the touch screen performed by the user's finger or other tool can be first obtained, the point A is used as the voice start point, and then a click operation on point B of the touch screen performed by the user's finger or other tool can be obtained, the point B is used as the voice termination point, the voice in the interval between the voice start point A and the voice termination point B is extracted as the voice of interest.

Certainly, after obtaining a voice start point and a voice termination point, the embodiment of the present application may further provide a confirmation process, such as setting a user dialog window to prompt the user to confirm the voice start point and the voice termination point, so as to avoid user's misoperation, or the like.

Step 405, extracting a voice segment between the voice start point and the voice termination point in the voice carrier file as the voice of interest.

Step 405 can specifically be extracting a voice segment between the voice start point and the voice termination point in the voice carrier file as the voice of interest.

For example, the voice extracting program integrated in the first document editing software can be used to extract the voice in the interval between the voice starting point and the voice termination point as the voice of interest, such as extracting the voice in the interval AB in Fig. 2 as the voice of interest.

Step 406: recognizing a text corresponding to the voice of interest in the first document editing software.

For example, the voice recognition program integrated in the first document editing software may be used to recognize the text corresponding to the voice of interest.

Step 407, moving the text to a location to be inserted in the document to be edited.

Step 407 may specifically be adding the text to a location to be inserted in the document to be edited in the first document editing software.

For example, if the terminal device is a terminal device using a mouse, the obtained location to be inserted may be the location of the mouse cursor in the document to be edited; if the terminal device is a terminal device using a touch screen, such as a commonly used touch screen mobile phone, the obtained location to be inserted may be the location of the touch screen cursor in the document to be edited.

The embodiment of the present application can also provide a confirmation process, for example, a user dialog window is provided to prompt the user to confirm the location to be inserted, so as to avoid user's misoperation. Then the text corresponding to the voice of interest is added to the location to be inserted in the document to be edited.

The specific manners of adding the text and moving the text to the document to be edited may be as shown in Step 105, which will not be repeated herein.

The embodiment of the present application may also obtain the location to be inserted after Step 401, that is, after opening the document to be edited in Step 401, the embodiment of the present application can detect the location of the mouse cursor or the location of the touch screen cursor as the location to be inserted. The embodiment of the present application may further provide a confirmation process after the detection, such as setting a user dialog window to prompt the user to confirm the location to be inserted, so as to avoid user's misoperation. Then, in Step 407, the text corresponding to the voice of interest is directly added to the location to be inserted in the document to be edited.

After the text is added to the location to be inserted in the document to be edited, the method of the embodiment of the present application further comprises Step 408, i.e. modifying the format of the text to the format of text in the document to be edited.

In the embodiment of the present application, after the text corresponding to the voice of interest is added to the document to be edited, the format of the original text in the document to be edited may be obtained first, the format including one or more of font, font size, color, and line spacing, and then the format of the text corresponding to the voice of interest is modified to be consistent with the format of the original text in the document to be edited, so as to make the text format of the user's document to be edited consistent.

It can be seen that in the method for quickly inserting a text of a voice carrier provided by the embodiment of the present application, an instruction of extracting an existing voice from the user is obtained, and then an existing voice carrier file is obtained. In the voice carrier file, a voice start point and a voice termination point are obtained and a voice segment between the voice start point and the voice termination point is extracted from the voice carrier file as the voice of interest. Then, in the first document editing software, the text corresponding to the voice of interest is recognized. Finally, the text is added to the location to be inserted in the document to be edited, and the format of the text is modified to the format of the text in the document to be edited. In the embodiment of the present application, when a document is edited in the first document editing software, an existing voice carrier file can be selected, a part of voice needed is extracted as the voice of interest and the text corresponding to the voice of interest is recognized and inserted automatically to the location to be inserted in the document to be edited. The embodiment of the present application only uses the first document editing software to realize automatic insertion of the text corresponding to the voice of interest into the location to be inserted in the document to be edited. Different from the prior art in which multiple software and programs need to be initiated and the recognized text corresponding to the voice of interest are selected, copied and pasted manually to the location to be inserted in the document to be edited, the present embodiment improves the work efficiency.

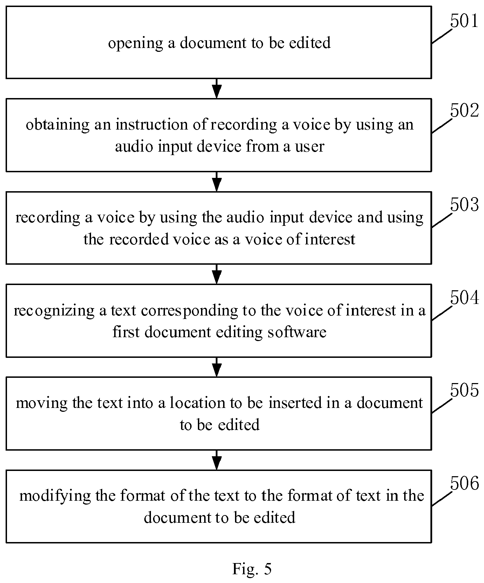

Fig. 5 is a flowchart of further another embodiment based on the method shown in Fig. 1, comprising the following steps.

Step 501, opening a document to be edited.

In the embodiment of the present application, if there is no document which is already opened, a first document editing software can be used to open a document as the document to be edited; if there is a document which is already opened, Step 501 is not required to be performed.

The embodiment of the present application uses the first document editing software to open a document to be edited. Specifically, a terminal device receives an instruction of opening a document from the user, such as a click operation on the icon of the first document editing software performed by the user, a click operation on the icon of the document to be edited performed by the user, a voice operation instruction from the user, and the like. The processor of the terminal device opens the document to be edited according to the instruction of opening a document.

For example, according to the instruction of opening a document which is a click operation on the icon of the first document editing software performed by the uses, the processor of the terminal device opens the first document editing software first, and then receives an instruction of selecting a document from the user, such as obtaining a selection operation on a document performed by the user, and finally opens the document as the document to be edited, or the like.

For example, according to the instruction of opening a document which is a click operation on the icon of the document to be edited performed by the user, the processor of the terminal device uses the first document editing software to open the document to be edited, or the like.

For example, according to the instruction of opening a document which is a voice operation instruction from the user, for example, opening a document named "File 1", the processor of the terminal device finds the document named "File 1", and uses the first document editing software to open the document named "File 1" as the document to be edited.

The manners for opening the document to be edited in the embodiment of the present application may be several and may be combined with each other, which are not detailed herein.

Step 502: obtaining an instruction of recording a voice by using an audio input device from a user.

Step 502 may specifically be recording a voice by using an audio input device and using the recorded voice as the voice of interest.

In the embodiment of the present application, an option can be provided in the user option window preset in the first document editing software, so that the user can obtain the voice of interest by selecting to record a voice through an audio input device. When a click operation on the option performed by the user is detected, it is considered that the user's voice acquisition instruction is obtained. This option can be located in an option window of a tool menu bar of the first editing software or a user dialog window outside the tool menu bar of the first editing software.

It should be noted that Step 501 and Step 502 in the embodiment of the present application may not be in a fixed order. That is to say, the embodiment of the present application may obtain an instruction of recording a voice by using an audio input device from a user after the document to be edited is obtained by using the first document editing software, or may open the document to be edited after an instruction of recording a voice by using an audio input device from a user is obtained by using the first document editing software. The order of the two is determined according to the user's habits or specific usage scenarios.

Step 503, recording a voice by using an audio input device and using the recorded voice as the voice of interest.

The embodiment of the present application may use the audio input device in the user's terminal device to record a voice as the voice of interest, such as recording a voice in the broadcast, a voice in the television program, a voice of a person. Of course, the embodiment of the present application can also use the Internet and local area network, Bluetooth to connect other audio input devices to record a voice as the voice of interest. In this embodiment, the duration, format of the recorded voice can be set according to requirements, and the voice preview can be provided to listen to the recorded voice, and the recorded voice can be processed by using various voice processing technologies, such as filtering environmental noise and improving voice clarity.

Step 504, recognizing a text corresponding to the voice of interest in the first document editing software.

In the embodiment of the present application, the voice recognition program in the first document editing software is used to recognize the text corresponding to the voice of interest.

Step 505, moving the text to a location to be inserted in the document to be edited.

Step 505 may specifically be adding the text to a location to be inserted in the document to be edited in the first document editing software.

For example, if the terminal device is a terminal device using a mouse, the obtained location to be inserted may be the location of the mouse cursor in the document to be edited; if the terminal device is a terminal device using a touch screen, the obtained location to be inserted may be the location of the touch screen cursor in the document to be edited.

The embodiment of the present application may also provide a confirmation process, for example, a user dialog window is provided to prompt the user to confirm the location to be inserted, so as to avoid user's misoperation. Then the text corresponding to the voice of interest is added to the location to be inserted in the document to be edited.

The specific addition manners of adding the text and moving the text to the document to be edited may be as shown in Step 105, which will not be repeated herein.

The embodiment of the present application may also obtain the location to be inserted after Step 501, that is, after opening the document to be edited in Step 501, the embodiment of the present application can detect the location of the mouse cursor or the location of the touch screen cursor as the location to be inserted. The embodiment of the present application may further provide a confirmation process after the detection, such as setting a user dialog window to prompt the user to confirm the location to be inserted, so as to avoid user's misoperation. Then, in Step 505, the text corresponding to the voice of interest is directly added to the location to be inserted in the document to be edited.

After the text is added to the location to be inserted in the document to be edited, the method of the embodiment of the present application further comprises Step 506, i.e. modifying the format of the text to the format of text in the document to be edited.

In the embodiment of the present application, after the text corresponding to the voice of interest is added to the document to be edited, the format of the original text in the document to be edited may be obtained first, the format including one or more of font, font size, color, and line spacing, and then the format of the text corresponding to the voice of interest is modified to be consistent with the format of the original text in the document to be edited, so as to make the text format of the user's document to be edited consistent.

It can be seen that in the method for quickly inserting a text of a voice carrier provided by the embodiment of the present application, an instruction of recording a voice by using an audio input device from a user is obtained, and then a voice is recorded by using the audio input device and the recorded voice is used as the voice of interest. Then, in the first document editing software, the text corresponding to the voice of interest is recognized. Finally, the text is added to the location to be inserted in the document to be edited, and the format of the text is modified to the format of the text in the document to be edited. In the embodiment of the present application, when a document is edited in the first document editing software, an audio input device can be used to record a voice, and the recorded voice is used as the voice of interest. The text corresponding to the voice of interest is recognized and inserted automatically to the location to be inserted in the document to be edited. The embodiment of the present application only uses the first document editing software to realize automatic insertion of the text corresponding to the voice of interest into the location to be inserted in the document to be edited. Different from the prior art in which multiple software and programs need to be initiated and the recognized text corresponding to the voice of interest are selected, copied and pasted manually to the location to be inserted in the document to be edited, the present embodiment improves the work efficiency.

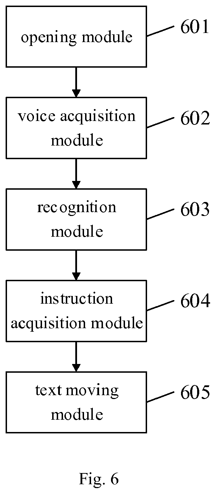

Fig. 6 is a schematic structural diagram of an apparatus for quickly inserting a text of a voice carrier provided by an embodiment of the present application, comprising:
an opening module 601, configured for opening a document to be edited;
an instruction acquisition module 602, configured for obtaining a voice acquisition instruction from a user;
a voice acquisition module 603, configured for obtaining a voice of interest according to the voice acquisition instruction;
a recognition module 604, configured for recognizing, in a first document editing software, a text corresponding to the voice of interest;
a text moving module 605, configured for moving the text into the document to be edited.

The text moving module 605 is specifically configured for adding the text to the document to be edited in the first document editing software.

It can be seen that, in the apparatus for quickly inserting a text of a voice carrier provided by the embodiment of the present application, a document to be edited is first opened. Secondly, a voice acquisition instruction from a user is obtained. The voice of interest is obtained according to the voice acquisition instruction. Then, in the first document editing software, the text corresponding to the voice of interest is recognized. Finally, the text is added into the document to be edited. In the embodiment of the present application, when a document is edited in the first document editing software, a voice of interest can be obtained, and the text corresponding to the voice of interest can be recognized and added into the document to be edited, so as to realize the recognition of the text corresponding to the voice of interest and automatic insertion into the document to be edited. The embodiment of the present application only uses the first document editing software to realize automatic insertion the recognized text. Different from the prior art in which multiple software and programs need to be initiated and the recognized text are copied and pasted manually, the present embodiment improves the work efficiency.

It should be noted that, the apparatus in the embodiment of the present application is an apparatus that implement the method for quickly inserting a text of a voice carrier, and all the embodiments of the method for quickly inserting a text of a voice carrier are applicable to the apparatus, and both can achieve the same or similar beneficial effects.

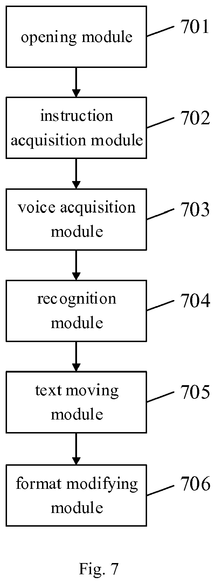

On the basis of Fig. 6, as a preferred embodiment, corresponding to the method shown in Fig. 3, Fig. 7 is a structural diagram of an embodiment based on the apparatus shown in Fig. 6, comprising:
a voice acquisition module 703, being specifically configured for selecting one or more voice carrier files as the voice of interest from stored voice carrier files according to a selection instruction, wherein in the embodiment of the present application, the voice acquisition instruction is a selection instruction.

In the embodiment of the present application, the text moving module 705 is specifically configured for:
adding the text to a location to be inserted in the document to be edited, wherein the location to be inserted is the location of the mouse cursor in the document to be edited, or the location of the touch screen cursor in the document to be edited.

The apparatus in the embodiment of the present application further comprises:
a format modifying module 706, configured for modifying, after the text is added to the document to be edited, the format of the text to the format of text in the document to be edited, the format including one or more of font, font size, color, and line spacing.

It can be seen that the apparatus for quickly inserting a text of a voice carrier provided by the embodiment of the present application opens a document to be edited in a first document editing software first, then obtains an instruction of selecting an existing voice from the user, and then obtains an existing voice carrier file as the voice of interest. Then, in the first document editing software, the text corresponding to the voice of interest is recognized. Finally, the text is added to the location to be inserted in the document to be edited, and the format of the text is modified to the format of the text in the document to be edited. In the embodiment of the present application, when a document is edited in the first document editing software, an existing voice carrier file can be selected, and the text corresponding to the voice is recognized and inserted automatically to the location to be inserted in the document to be edited. The embodiment of the present application only uses the first document editing software to realize automatic insertion of the text corresponding to the voice of interest into the location to be inserted in the document to be edited. Different from the prior art in which multiple software and programs need to be initiated and the recognized text corresponding to the voice of interest are selected, copied and pasted manually to the location to be inserted in the document to be edited, the present embodiment improves the work efficiency.

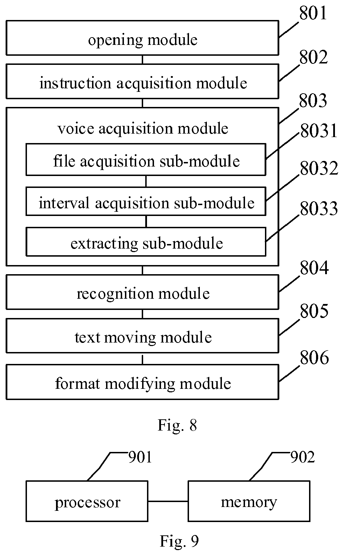

On the basis of Fig. 6, as a preferred embodiment, corresponding to the method shown in Fig. 4, Fig. 8 is a structural diagram of another embodiment based on the apparatus shown in Fig. 6, comprising:
a voice acquisition module 803, wherein in the embodiment of the present application, the voice acquisition instruction is an extracting instruction, comprising:
a file acquisition sub-module 8031, configured for obtaining an existing voice carrier file;
an interval acquisition sub-module 8032, configured for obtaining a voice start point and a voice termination point in the voice carrier file;
an extracting sub-module 8033, configured for extracting a voice segment between the voice start point and the voice termination point in the voice carrier file as the voice of interest.

The interval acquisition sub-module 8032 is specifically configured for obtaining a voice start point and a voice termination point in the voice carrier file according to the extracting instruction.

In the embodiment of the present application, the interval acquisition sub-module 8032 is specifically configured for:
determining a voice start point and a voice termination point in a voice carrier file according to the location of a mouse cursor, or
determining a voice start point and a voice termination point in a voice carrier file according to the location of a touch screen cursor.

In the embodiment of the present application, the text moving module 805 is specifically configured for:
adding the text to a location to be inserted in the document to be edited, wherein the location to be inserted is the location of the mouse cursor in the document to be edited or the location of the touch screen cursor in the document to be edited.

The embodiment of the present application further comprises:
a format modifying module 806, configured for modifying, after the text is added to the document to be edited, the format of the text to the format of text in the document to be edited, the format including one or more of font, font size, color, and line spacing.

It can be seen that the apparatus for quickly inserting a text of a voice carrier provided by the embodiment of the present application opens a document to be edited in a first document editing software first, then obtains an instruction of extracting an existing voice from the user, and then obtains an existing voice carrier file. In the voice carrier file, a voice start point and a voice termination point are obtained and a voice segment between the voice start point and the voice termination point is extracted in the voice carrier file as the voice of interest. Then, in the first document editing software, the text corresponding to the voice of interest is recognized. Finally, the text is added to the location to be inserted in the document to be edited, and the format of the text is modified to the format of the text in the document to be edited. In the embodiment of the present application, when a document is edited in the first document editing software, an existing voice carrier file can be selected, a part of voice needed is extracted as the voice of interest and the text corresponding to the voice of interest is recognized and inserted automatically to the location to be inserted in the document to be edited. The embodiment of the present application only uses the first document editing software to realize automatic insertion of the text corresponding to the voice of interest into the location to be inserted in the document to be edited. Different from the prior art in which multiple software and programs need to be initiated and the recognized text corresponding to the voice of interest are selected, copied and pasted manually to the location to be inserted in the document to be edited, the present embodiment improves the work efficiency.

On the basis of Fig. 6, as a preferred embodiment, corresponding to the method shown in Fig. 5, the apparatus according to an embodiment of the present application comprises:
a voice acquisition module, wherein in the embodiment of the present application, the voice acquisition instruction is a recording instruction, and the voice acquisition module is specifically configured for:
recording a voice by using an audio input device, and using the recorded voice as the voice of interest.

In the embodiment of the present application, the text adding module is specifically configured for:
adding the text to a location to be inserted in the document to be edited, wherein the location to be inserted is the location of the mouse cursor or the location of the touch screen cursor.

The embodiment of the present application further comprise:
a format modifying module, configured for modifying, after the text is added to the document to be edited, the format of the text to the format of text in the document to be edited, the format including one or more of font, font size, color, and line spacing.

It can be seen that the apparatus for quickly inserting a text of a voice carrier provided by the embodiment of the present application opens a document to be edited in a first document editing software first, then obtains an instruction of recording a voice by using an audio input device from a user, and then records a voice by using the audio input device and uses the recorded voice as the voice of interest. Then, in the first document editing software, the text corresponding to the voice of interest is recognized. Finally, the text is added to the location to be inserted in the document to be edited, and the format of the text is modified to the format of the text in the document to be edited. In the embodiment of the present application, when a document is edited in the first document editing software, an audio input device can be used to record a voice, and the recorded voice is used as the voice of interest. The text corresponding to the voice of interest is recognized and inserted automatically to the location to be inserted in the document to be edited. The embodiment of the present application only uses the first document editing software to realize automatic insertion of the text corresponding to the voice of interest into the location to be inserted in the document to be edited. Different from the prior art in which multiple software and programs need to be initiated and the recognized text corresponding to the voice of interest are selected, copied and pasted manually to the location to be inserted in the document to be edited, the present embodiment improves the work efficiency.

An embodiment of the present application further discloses an electronic device, as shown in Fig. 9, comprising a processor 901 and a memory 902.

The memory 902 is configured for storing a computer program.

The processor 901 is configured for implementing any of the above methods for quickly inserting a text of a voice carrier when executing the program stored in the memory 902.

An embodiment of the present application further discloses a computer readable storage medium, wherein the computer readable storage medium stores a computer program, and the computer program implements any of the above methods for quickly inserting a text of a voice carrier when being executed by a processor.

An embodiment of the present application also discloses executable program code for implementing any of the above methods for quickly inserting a text of a voice carrier when being executed.

It should be noted that the relationship terms herein such as "first", "second", and the like are only used for distinguishing one entity or operation from another entity or operation, but do not necessarily require or imply that there is any actual relationship or order between these entities or operations. Moreover, the terms "include", "comprise" or any other variants thereof are intended to cover non-exclusive inclusions, so that processes, methods, articles or devices comprising a series of elements comprise not only those elements listed but also those not specifically listed or the elements intrinsic to these processes, methods, articles, or devices. Without further limitations, elements defined by the sentences "comprise(s) a." or "include(s) a." do not exclude that there are other identical elements in the processes, methods, articles, or devices which include these elements.

The various embodiments in the present specification are described in a related manner, and the same or similar parts between the various embodiments can be referred to each other, and each embodiment focuses on the differences from the other embodiments. In particular, for the embodiments of the apparatus for quickly inserting a recognized text shown in Figs. 6-8, the electronic device embodiment shown in Fig.9, the above embodiment of a computer readable storage medium and the above embodiment of executable program code, since they are basically similar to the embodiments of the methods for quickly inserting a text of a voice carrier shown in Figs. 1-5, the description is relatively simple, and the relevant parts can be referred to the description of the embodiments of the methods for quickly inserting a text of a voice carrier shown in Figs. 1-5.

The above is only the preferred embodiments of the present application, and is not intended to limit the present application. Any modifications, equivalent substitutions, improvements, etc., which are made within the spirit and principles of the present application, fall within the protection scope of the present application.

## Claims

1. A method for quickly inserting a text of a voice carrier, comprising:
obtaining a voice acquisition instruction from a user;
obtaining a voice of interest according to the voice acquisition instruction;
recognizing a text corresponding to the voice of interest in a first document editing software;
adding the text into a document to be edited in the first document editing software.

2. The method according to claim 1, wherein the voice acquisition instruction is a selecting instruction; obtaining a voice of interest according to the voice acquisition instruction comprises:
selecting one or more voice carrier files from stored voice carrier files as the voice of interest according to the selecting instruction.

3. The method according to claim 1, wherein the voice acquisition instruction is an extracting instruction; obtaining a voice of interest according to the voice acquisition instruction comprises:
obtaining a voice start point and a voice termination point in a voice carrier file according to the extracting instruction;
extracting a voice segment between the voice start point and the voice termination point in the voice carrier file as the voice of interest.

4. The method according to claim 3, wherein obtaining a voice start point and a voice termination point in a voice carrier file according to the extracting instruction comprises:
determining the voice start point and the voice termination point in the voice carrier file by using a location of a mouse cursor, or
determining the voice start point and the voice termination point in the voice carrier file by using a location of a touch screen cursor.

5. The method according to claim 1, wherein the voice acquisition instruction is a recording instruction; obtaining a voice of interest according to the voice acquisition instruction comprises:
recording a voice by using an audio input device and using the recorded voice as the voice of interest.

6. The method according to claim 1, wherein adding the text into a document to be edited in the first document editing software comprises:
adding the text into a location to be inserted in the document to be edited, wherein the location to be inserted is a location of a mouse cursor, or a location of a touch screen cursor.

7. The method according to claim 6, wherein after adding the text into the document to be edited in the first document editing software, the method further comprises:
modifying the format of the text to the format of text in the document to be edited, the format comprising one or more of font, font size, color and line spacing.

8. An apparatus for quickly inserting a text of a voice carrier, comprising:
an instruction acquisition module, configured for obtaining a voice acquisition instruction from a user;
a voice acquisition module, configured for obtaining a voice of interest according to the voice acquisition instruction;
a recognition module, configured for recognizing a text corresponding to the voice of interest in a first document editing software;
a text moving module, configured for adding the text into a document to be edited in the first document editing software.

9. The apparatus according to claim 8, wherein the voice acquisition instruction is a selecting instruction; the voice acquisition module is specifically configured for selecting one or more voice carrier files from stored voice carrier files as the voice of interest according to the selecting instruction.

10. The apparatus according to claim 8, wherein the voice acquisition instruction is an extracting instruction; the voice acquisition module comprises:
an interval acquisition sub-module, configured for obtaining a voice start point and a voice termination point in a voice carrier file according to the extracting instruction;
an extracting sub-module, configured for extracting a voice segment between the voice start point and the voice termination point in the voice carrier file as the voice of interest.

11. The apparatus according to claim 10, wherein the interval acquisition sub-module is specifically configured for:
determining the voice start point and the voice termination point in the voice carrier file by using a location of a mouse cursor, or
determining the voice start point and the voice termination point in the voice carrier file by using a location of a touch screen cursor.

12. The apparatus according to claim 8, wherein the voice acquisition instruction is a recording instruction; the voice acquisition module is specifically configured for:
recording a voice by using an audio input device and using the recorded voice as the voice of interest.

13. The apparatus according to claim 8, wherein the text moving module is specifically configured for:
adding the text into a location to be inserted in the document to be edited, wherein the location to be inserted is a location of a mouse cursor, or a location of a touch screen cursor.

14. The apparatus according to claim 13, wherein the device further comprises:
a format modifying module, configured for modifying the format of the text to the format of text in the document to be edited after adding the test into the document to be edited, the format comprising one or more of font, font size, color and line spacing.

15. An electronic device, wherein it comprises a processor and a memory,
the memory is configured for storing a computer program;
the processor is configured for implementing steps of the method according to any of claims 1-7 when executing the program stored in the memory.

16. A computer readable storage medium, wherein the computer readable storage medium stores a computer program, and the computer program implements steps of the method according to any of claims 1-7 when being executed by a processor.

17. An executable program code, wherein the executable program code is configured for implementing steps of the method according to any of claims 1-7 when being executed.
